# EUROPEAN PATENT APPLICATION

(11) **EP 1 188 759 A2**
(43) Date of publication of application: **20.03.2002**
(21) Application number: 01307760.7
(22) Date of filing: 12.09.2001
(51) Int. Cl.: C07F 7/20

(54) **Processes and apparatus for the purification of methylsilanes**

(30) Priority: 19.09.2000 US 664627
(71) Applicant: THE BOC GROUP, INC., Murray Hill, New Providence, New Jersey 07974-2082 (US)
(72) Inventor: Helly, Patrick Joseph, Valley Center, California 92082 (US); Akhtar, Masud, Lawrenceville, New Jersey 08648 (US)
(74) Representative: Bousfield, Roger James

(57) **Abstract**

A process for the purification of methylsilane, comprising the steps of providing a source of methylsilane containing impurities, adding the methylsilane to an adsorption unit, and collecting the purified methylsilane.

## Description

This invention relates to processes for purifying methylsilane and more particularly, the to the purification and condensation of methylsilane gas by cryogenic adsorption techniques.

Organosilicon gases, particularly methylsilane are employed in the semiconductor industry as coatings and films. A typical process for producing methylsilanes is called the "direct process". This is the reaction of methyl chloride and silicon in the presence of a copper catalyst. The effluent from the reactor, however, is still a mixture of methylsilanes and high boiling materials such as disilanes, polysiloxanes, silylmethylenes and the like. This effluent must then be distilled to separate the methylsilane from the other silanes present.

Additionally, these processes also result in the generation of olefinic and chlorinated hydrocarbons. These individual species can cause separation problems with the above-mentioned distillation process, as well as problems relating to colour and stability of the resulting product.

A typical sample of methylsilane gas may find various impurities in it which can interfere with the use of methylsilane in semiconductor fabrication and processing. These impurities include for example hydrogen, nitrogen, argon, oxygen, methane, ethane, carbon dioxide, silane, chlorosilane and dimethylsilane.

It has now been discovered that the use of an adsorption process, especially a cryo-adsorption one, can remove impurities, particularly chlorosilanes and carbon dioxide more effectively than known processes such as distillation.

In accordance with the invention, there is provided a process for the purification of methylsilane, comprising the steps of providing a source of methylsilane containing impurities, adding the methylsilane to an adsorption unit, and collecting the purified methylsilane.

Generally, therefore, the present invention provides for a process for the purification of methylsilane. The process provides for the steps of providing a source of methylsilane containing impurities, directing the methylsilane to an adsorption vessel for adsorption and degassing and directing the purified methylsilane to a collection vessel.

The adsorption vessel preferably contains an appropriate adsorbent such as magnesium silicate and is advantageously kept at a temperature of about minus 20°C to minus 40°C, most preferably about minus 40°C.

The impurities typically found in methylsilane gas include hydrogen, nitrogen, argon, oxygen, methane, ethane, carbon dioxide, silane, chlorosilane and dimethylsilane.

For a better understanding of the invention, reference will now be made, by way of exemplification only, to the accompanying drawings, in which:

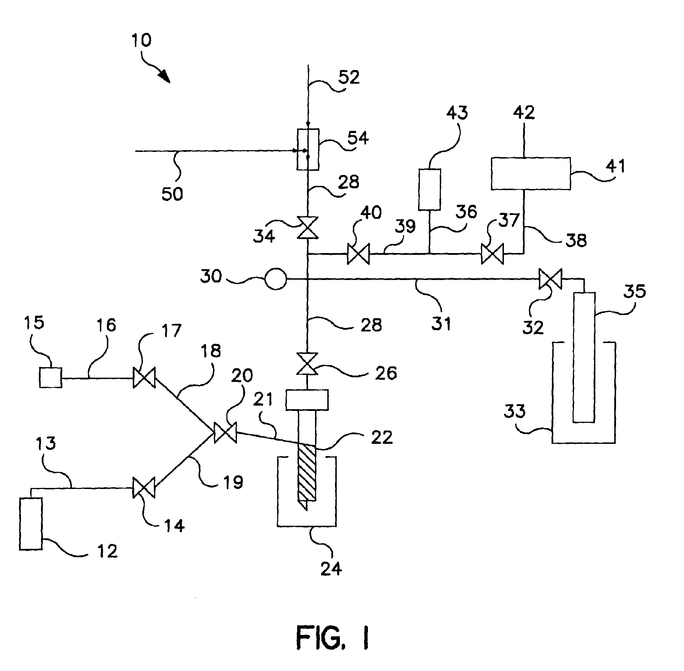

Figure 1 is a schematic representation of the system used to purify methylsilane of the invention.

Figure 1 is a schematic representation of the overall purifying system 10. A vessel 12 contains the methylsilane which is to be purified. Typically, it is a cylinder and valve arrangement which attaches to a line 13 and connects via 13 to an isolation valve 14.

An inert purge gas, preferably helium, is supplied to the system from a container 15. The helium can be any grade which will effectively aid in purging the system, such as grade 6. The container 15 is typically a cylinder and regulator which connects to an inlet valve 17 via line 16. Lines 18 and 19 connect the valves 17 and 14 respectively to a valve 20 which is the inlet valve to an adsorption unit 22.

The inlet valve 20 attaches to the adsorption unit 22 via a line 21. The line can connect directly to the adsorption unit or can wrap around the unit in a spiral fashion prior to connecting to the unit. The adsorption unit 22 is typically fashioned from stainless steel and will contain an appropriate adsorbent. Representative examples include but are not limited to magnesium silicate which is available from Aldridge Chemicals as Florosil, alumina, silica gel, molecular sieves and zeolites. The adsorption unit is generally kept at a temperature ranging from about minus 20°C to about minus 40°C, with a temperature of minus 40°C preferred, by a container 24. The container is typically a stainless steel dewar capable of holding liquid nitrogen.

A line 28 connects the adsorption unit with an outlet isolation valve 26 to a line 31 which is attached to a pressure gauge 30. The purified methylsilane will travel through the line 28 to the line 31 to an isolation valve 32 which connects to a methylsilane receiver unit 35. This unit is typically a cylinder which is capable of containing gas. The receiver unit is within a stainless steel container 33 capable of holding liquid nitrogen. The receiver unit is typically held at a temperature ranging from about minus 170°C to about minus 190°C with a temperature of about minus 190°C preferred.

The line 28 further connects to a line 39 and further connects to a line 36 through a valve 40. The line 36 connects with a capacitance manometer vacuum gauge. The line 39 continues through a high vacuum isolation valve 37 to a line 38 which attaches to a vacuum system 41. The vacuum system is a turbo molecular vacuum pump/diaphragm backing pump system which is vented through a line 42.

The line 28 further connects to a vacuum venturi isolation valve 34 which leads to a vacuum venturi 54 which utilises nitrogen gas which is delivered through a line 52. A line 50 connects a scrubber system to the venturi.

Typically, the components of this system are made of a material which can be manipulated and shaped and can withstand the somewhat large changes in temperature that the system undergoes. This material may be stainless steel, but could also be glass in parts.

In one embodiment of the invention, the system of Figure 1 is first checked for vacuum integrity. In a first step, all the valves 14, 17, 20, 26, 30, 32, 34, 40 and 37 are closed, the vacuum system is started and allowed to work up for 30 minutes. The valve 37 is opened in a second step and the capacitance manometer meter 43 is turned on. The meter is allowed to warm up for 30 minutes in a third step.

In a fourth step, the source cylinder of methylsilane 12 is attached with its valve closed to the manifold valve 14. The helium cylinder 15 with its valve closed is attached to the valve 17 in a fifth step. The receiver cylinder 35 is attached to the manifold valve 32 and the cylinder is opened in a sixth step. After thirty minutes, a seventh step is performed by opening the valves 40, 26, 20, 17 and 19 while keeping the valve 34 closed. An eighth step is to allow the manifold system to evacuate to a stable pressure reading. In a ninth step, the valve 37 is closed and the manometer meter 43 checked for leaks. Lastly, in a tenth step, the entire system 10 is purged ten times with grade 6 helium to 100 psig, held at pressure for thirty minutes, followed by vacuum evacuation to a low-pressure stable reading.

Once the system has been satisfactorily purged and evacuated, the purification procedure may begin. First, the source cylinder 12 is cooled to minus 40°C using a delimonene/dry ice bath, in a stainless steel dewar. Next, the adsorber vessel 22 is cooled to minus 40°C with a delimonene/dry ice bath in the stainless steel dewar 24.

The receiver cylinder 35 is then cooled to minus 190°C using liquid nitrogen in the stainless steel dewar 33. All temperature measurements were made using a thermocouple and meter which are not illustrated in Figure 1.

The fourth step ensures the vacuum integrity of the manifold system by opening the valves 14, 40 and 37 while keeping the source cylinder 12 and valves 17 and 34 closed. Next, the valves 40 and 37 are closed and the source cylinder slowly opened up with its pressure measured at 30.

Boiling of the liquid nitrogen is an indication that gas is flowing from the source cylinder through the adsorption vessel and collecting in the receiver cylinder. When the boiling has stopped, the cooling bath is removed from the source cylinder and the cylinder is allowed to warm to room temperature. The source cylinder is then warmed with, for example, a heat gun until there is no observable liquid nitrogen boiling in the receiver cylinder.

At this stage, the purification transfer is complete and shutdown is performed. The valve 32 is closed, the line to the nitrogen dewar is removed, the source cylinder is closed and the valve 34 is opened allowing the manifold to vent to the scrubber through the line 50. Once the receiver cylinder has warmed to room temperature, the valve 32 is closed and the receiver cylinder removed and forwarded for analysis. The entire system can then be purged and evacuated as described above.

The above procedure was performed on a commercially available sample of methylsilane. The sample as received had the following impurities as determined through gas chromatography measurement as shown in Table I.

**Table I**

| Component | Amount (ppm) |
|---|---|
| Hydrogen | 50 |
| Nitrogen | 0.70 |
| Ar and O₂ | < 0.5 |
| Methane | 0.13 |
| Ethane | 0.96 |
| Carbon Dioxide | 1.92 |
| Silane | < 0.5 |
| Chlorosilane | 6.5 |
| Dimethylsilane | -- |

After running the purification process once, the sample of methylsilane had the following levels of contaminants as shown in Table II.

**Table II**

| Component | Amount (ppm) |
|---|---|
| Hydrogen | 8 |
| Ar and O₂ | <0.1 * |
| Carbon Dioxide | <0.1 * |
| Chlorosilane | < 0.5 * |
| Nitrogen | <0.1 * |
| Methane | <0.1 * |
| Ethane | < 0.2 * |
| Silane | < 0.5 * |

| | |
|---|---|
| (* = detection limit) | |

As can be seen, only one residual contaminant was in higher than trace amounts after the purification process.

## Claims

1. A process for the purification of methylsilane, comprising the steps of providing a source of methylsilane containing impurities, adding the methylsilane to an adsorption unit, and collecting the purified methylsilane.

2. A process according to Claim 1 in which the adsorption unit contains an adsorbent selected from the group consisting of magnesium silicate, alumina, silica gel, molecular sieves, and zeolites.

3. A process according to Claim 1 or Claim 2 in which the impurities include one or more of hydrogen, nitrogen, argon, oxygen, methane, ethane, carbon dioxide, silane, chlorosilane and dimethylsilane.

4. A process according to any preceding claim in which the source of methylsilane and the adsorption unit are at a temperature of minus 20°C to minus 40°C.

5. A process according to Claim 4 in which the temperature is minus 40°C.

6. A process according to any preceding claim in which the methylsilane is collected in a collection unit at a temperature of about minus 170°C to minus 190°C.

7. A process according to any preceding claim in which the adsorption unit is purged with an inert gas prior to introducing said methylsilane.

8. A process according to Claim 7 in which the inert gas is helium.
